# EUROPÄISCHE PATENTSCHRIFT

(11) **EP 0 509 216 B1**
(45) Veröffentlichungstag und Bekanntmachung des Hinweises auf die Patenterteilung: **07.02.1996**
(21) Anmeldenummer: 92102984.9
(22) Anmeldetag: 22.02.1992
(51) Int. Cl.: B29C 47/22, B29C 47/06, B29C 53/30, B29C 47/12

(54) **Vorrichtung zur Herstellung von Kunststoff-Rohren**
Device for the manufacturing of plastic tubes
Dispositif pour la fabrication de tuyaux en matière plastique

(30) Priorität: 08.04.1991 DE 4111228
(43) Veröffentlichungstag der Anmeldung: 21.10.1992
(73) Patentinhaber: Hegler, Wilhelm, D-97688 Bad Kissingen (DE)
(72) Erfinder: Hegler, Ralph-Peter, Dr., W-8730 Bad Kissingen (DE); Hegler, Wilhelm, W-8730 Bad Kissingen (DE)
(74) Vertreter: Rau, Manfred, Dr. Dipl.-Ing.

(56) Entgegenhaltungen:
- EP-A- 0 063 060
- EP-A- 0 075 809
- EP-A- 0 250 828
- EP-A- 0 359 088
- EP-A- 0 420 019
- DE-U- 9 011 448

## Beschreibung

Die Erfindung betrifft eine Vorrichtung zur Herstellung von Kunststoff-Rohren nach dem jeweils identischen Oberbegriff der Ansprüche 1 und 2.

Bei einer derartigen aus der DE 24 13 879 C3 (entsprechend US 3.976.414) bekannten Vorrichtung ist ein Düsenring mittels einer einstückig mit ihm ausgebildeten Gewindehülse relativ zum Spritzkopf in Richtung seiner Mittel-Längs-Achse verstellbar. Dadurch wird die Weite der Düse verstellt und damit die Wanddicke eines extrudierten Schlauches aus warmplastischem Kunststoff verändert. Bei einer Ausgestaltung der Vorrichtung zur Herstellung von Kunststoff-Verbund-Rohren, bei der zwei Kanäle vorgesehen sind, die in jeweils einer Düse enden, ist jede Düse mit einem solchen in Richtung der Mittel-Längs-Achse verstellbaren Teil versehen.

Bei einer weiteren aus der US 4.789.327 bekannten Vorrichtung der gattungsgemäßen Art ist ein einen Kanal umgebendes Mantelrohr auf seiner Außenseite benachbart zur Düse mit einem Gewinde versehen, auf das ein Flanschring aufschraubbar ist. An diesem Flanschring ist ein Düsenring mittels Schrauben befestigbar. Durch Verdrehen des Flanschringes ist die Weite der Düse einstellbar. Das Mantelrohr ist an seinem der Düse entgegengesetzten Ende mittels radial zur Mittel-Längs-Achse verlaufender Justierschrauben radial einstellbar.

Aus der EP-A-0 075 809 ist ein Spritzkopf für einen Extruder bekannt, bei dem ein Mundstück einer ringförmigen Düse in einer Kugelkalotte gelagert ist. Die Düsenspaltweite kann über dem Umfang durch axial wirkende Einstellschrauben verändert werden.

Aus der EP-A-0 063 060 ist ein Spritzkopf eines Extruders bekannt, bei dem das Mundstück einer ringförmigen Düse in einer Kugelkalotte gelagert ist. Die Düsenspaltweite kann mittels achsparallel wirkender Druckschrauben über den Umfang eingestellt werden.

Der Erfindung liegt die Aufgabe zugrunde, eine Vorrichtung der gattungsgemäßen Art so auszugestalten, daß eine feinfühlige Einstellung der Weite einer ringförmigen Düse möglich ist.

Diese Aufgabe wird erfindungsgemäß durch die Merkmale des Anspruches 1 gelöst. Das Verkanten des die Düse begrenzenden Düsenrings relativ zur Mittel-Längs-Achse des Spritzkopfes bewirkt, daß die Weite der Düse über den Umfang verändert wird, so daß auch die Wanddicke des aus der Düse extrudierten Schlauches verändert werden kann. Zusammen mit der gattungsgemäß vorausgesetzten Einstellbarkeit der Grund-Weite der Düse führt dies zu einer sehr feinen Einstellbarkeit. Die Einstellung der Grund-Weite der Düse und die Einstellung der Düsenspaltweite über den Umfang der Düse erfolgt hierbei mittels derselben Einrichtungen, nämlich der über den Umfang abwechselnd verteilt angeordneten Zug-Einstellschrauben und Druck-Einstellschrauben. Diese feine Einstellbarkeit ist von besonderer Bedeutung bei Vorrichtungen zur Herstellung von Kunststoff-Verbund-Rohren, bei denen also konzentrisch zueinander zwei Schläuche aus warmplastischem Kunststoff extrudiert und auf der Formstrecke verformt und miteinander verbunden werden.

Die Aufgabe wird weiterhin durch die Merkmale des Anspruches 2 gelöst, wobei ein die Düse begrenzender Innendorn-Teller zur Mittel-Längs-Achse verkantbar ausgebildet ist. Die Ansprüche 3 bis 6 geben hierfür eine ganz besonders vorteilhafte konstruktive Lösung wieder.

Nach Anspruch 7 sind die Düsenringe nach Anspruch 1 in besonders einfacher Weise verstellbar, weils sie leicht zugänglich sind.

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: eine Draufsicht auf eine Vorrichtung zur Herstellung von Kunststoff-Rohren,
- Fig. 2: einen vertikalen Längsschnitt durch den Spritzkopf der Vorrichtung,
- Fig. 3: einen längsschnitt durch eine am Spritzkopf angebrachte Temperierglocke und
- Fig. 4: eine Teil-Stirnansicht der Temperierglocke gemäß dem Sichtpfeil IV in Fig. 3.

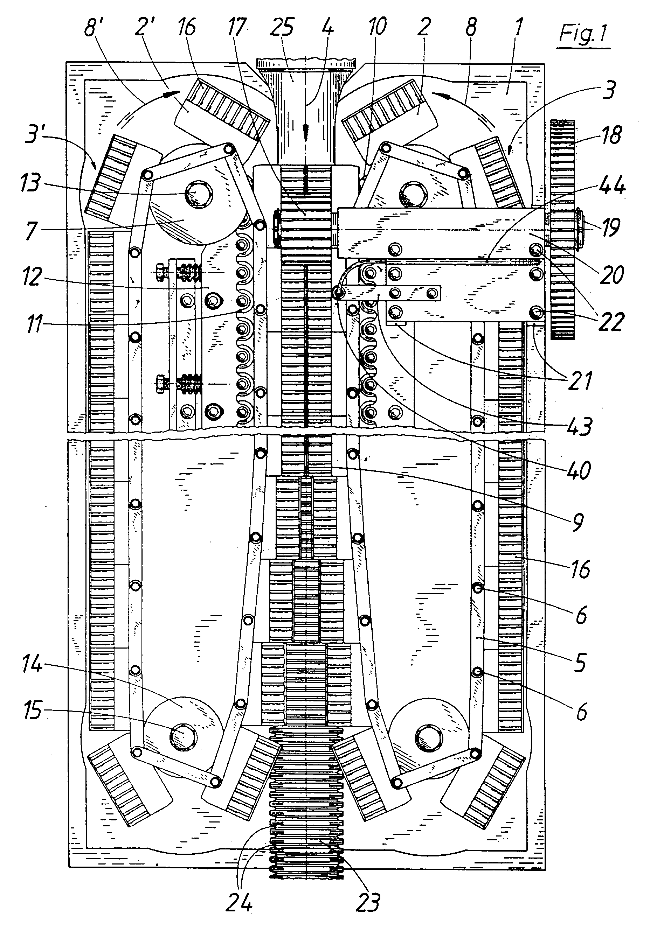

Wie Fig. 1 erkennen laßt, weist eine Vorrichtung zur Herstellung von Kunststoff-Verbundrohren mit Querrillen einen Maschinentisch 1 auf, auf dem Halbkokillen 2 bzw. 2' angeordnet sind, die jeweils zu zwei sogenannten Ketten 3 bzw. 3' miteinander verbunden sind. Hierzu ist an jeder Halbkokille 2 bzw. 2' in ihrem außenliegenden, in Produktionsrichtung 4 vorderen Bereich eine Lasche 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3,3' sind an ihrem in Produktionsrichtung 4 gesehen rückwärtigen Ende über als sogenannte Einlaufrollen 7 dienende Umlenkräder geführt. Die einzelnen Halbkokillen 2,2' werden beim Umlauf der Ketten 3,3' entsprechend den Umlaufrichtungspfeilen 8 bzw. 8' in eine Formstrecke 9 eingeschwenkt, in der jeweils zwei Halbkokillen 2,2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2,2' zu einer parallelen und aneinanderliegenden Stellung zu erreichen, sind sogenannte Schließrollen 10 vorgesehen, die die in Produktionsrichtung 4 hinteren Enden der Halbkokillen 2,2' beschleunigt zusammenführen.

In der Formstrecke 9 selber werden die aneinanderliegenden Halbkokillen 2,2' mittels Führungsrollen 11, die in Führungsleisten 12 drehbar gelagert sind, gegeneinander gedrückt. Die Einlaufrollen 7 sind um Achszapfen 13 drehbar am Maschinentisch 1 angebracht. Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2,2' ist eine Verzahnung 16 ausgebildet, wobei die beiden Verzahnungen 16 der einander paarweise zugeordneten Halbkokillen 2,2' miteinander fluchten, so daß von oben ein gemeinsames Antriebsritzel 17 in diese Verzahnung 16 eingreifen kann, das die Halbkokillen 2,2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 gegenüber dem Maschinentisch abgestützt und mit letzterem mittels Schrauben 22 fest verbunden ist.

Auf der dargestellten Vorrichtung werden Kunststoff-Rohre 23, und zwar sogenannte Verbundrohre, mit unter anderem einer Querprofilierung, d.h. mit über deren Umfang umlaufenden Rillen 24 hergestellt.

Die Rohre 23 werden weiter unten noch genauer beschrieben. Hierzu ist ein Extruder vorgesehen, von dem nur der weiter unten noch genauer zu beschreibende Spritzkopf 25 angedeutet ist. Die bisher beschriebene Vorrichtung ist bekannt, und zwar beispielsweise aus der EP-A 0 065 729 (entsprechend US 4 492 551) und aus der DE 40 21 564.4.

Der Spritzkopf 25 ist mittels Schrauben 26 an einem Anschlußteil 27 des nicht dargestellten Extruders befestigt. Er weist einen im wesentlichen ringförmigen Düsenkörper 28 auf, an dem alle wesentlichen Teile des Spritzkopfes befestigt sind. Dieser Düsenkörper weist konzentrisch zu einer gemeinsamen Mittel-Längs-Achse 29 des Spritzkopfes 25 einen in Produktionsrichtung 4 vorspringenden Ringbund 30 auf. In diesem Ringbund 30 ist mittels einer Innen-Gewinde-Verbindung 31 ein Innen-Düsendorn 32 befestigt. Auf dem Außenumfang des Ringbundes 30 ist mittels einer Außen-Gewinde-Verbindung 33 ein Außen-Düsendorn 34 befestigt. Schließlich ist wiederum konzentrisch zur Achse 29 noch ein Außendüsen-Mantel 35 mittels eines Justierrings 36 und mittels der Schrauben 26 am Düsenkörper 28 befestigt.

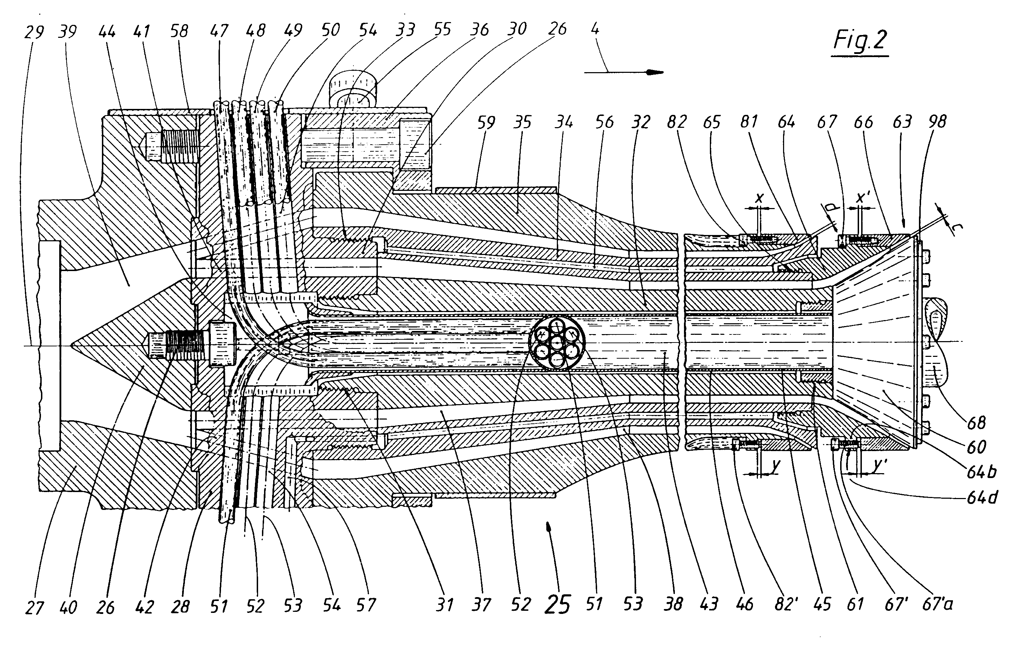

Der Innen-Düsendorn 32 und der Außen-Düsendorn 34 begrenzen zwischen sich einen Innen-Kanal 37, während der Außen-Düsendorn 34 und der Außendüsen-Mantel 35 einen Außen-Kanal 38 zwischen sich begrenzen. Der Innen-Kanal 37 und der Außen-Kanal 38 sind - wie Fig. 2 erkennen läßt - an einen vom Extruder kommenden Spritzkanal 39 angeschlossen. Um einen stetigen Fluß der vom Extruder kommenden Kunststoffschmelze in die Kanäle 37,38 zu erreichen, ist am Düsenkörper 28 ein in den Spritzkanal 39 entgegen der Produktionsrichtung 4 gerichteter Führungskegel 40 angebracht.

Im Düsenkörper 28 ist der Innen-Kanal 37 von sich radial erstreckenden Innen-Stegen 41 und der Außen-Kanal 38 von sich ebenfalls radial zur Achse 29 erstreckenden Außen-Stegen 42 durchsetzt, so daß der Düsenkörper 28 tatsächlich ein Teil ist. Wie Fig. 2 entnehmbar ist, erstreckt sich der Innen-Kanal 37 im Düsenkörper 28 durch den Ringbund 30.

Der Innen-Düsendorn 32 ist mit einem konzentrisch zur Achse 29 verlaufenden Leitungs-Kanal 43 versehen, der in eine Kammer 44 im Düsenkörper 28 mündet. In diesem Leitungs-Kanal 43 ist ein Schutzrohr 45 konzentrisch zur Achse 29 angeordnet, das durch einen Luftspalt 46 zum Innen-Düsendorn 32 isoliert ist. Das Schutzrohr 45 selber besteht aus Stahl.

Durch das Schutzrohr 45 im Leitungs-Kanal 43 sind Versorgungs-Schläuche 47,48,49,50,51,52,53 geführt. Diese sind radial von außen durch den Düsenkörper 28 in dessen Kammer 44 geführt, wozu im Düsenkörper 28 etwa radial verlaufende, bis in die Kammer 44 geführte Bohrungen 54 ausgebildet sind, die selbstverständlich die Außen-Stege 42 und die Innen-Stege 41 durchsetzen, damit die Schläuche 47 bis 53 nicht mit der in den Kanälen 37 bzw. 38 transportierten Schmelze in Berührung kommen. Die Schläuche 47 bis 53 sind aus hochwarmfestem Kunststoff, beispielsweise Polytetrafluorethylen, hergestellt.

Der Außendüsen-Mantel 35 wird mittels im Justierring 36 angebrachter, sich radial zur Achse 29 erstreckender Justierschrauben 55 ausgerichtet und festgelegt. Im Außen-Düsendorn 34 sind weiterhin Gaskanäle 56 ausgebildet, die sich in Produktionsrichtung 4 erstrecken und die an einen Zuführkanal 57 im Düsenkörper 28 angeschlossen sind, der sich etwa radial zur Achse 29 erstreckt und den Steg 42 durchsetzt. Der Spritzkopf 25 ist über einen größeren Teil seiner Länge mit Heizungen 58,59 umgeben, um ein Abkühlen der vom Spritzkanal 39 kommenden, durch die Kanäle 37,38 geführten Schmelze zu vermeiden.

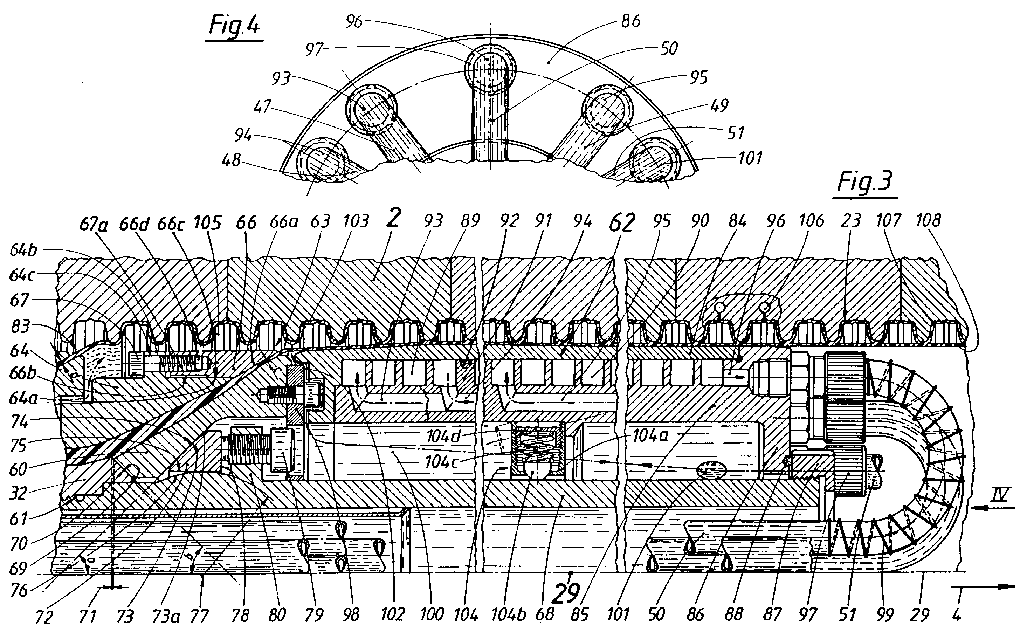

Die Ausgestaltung des Spritzkopfes 25 im Bereich seiner in Fig. 2 rechts dargestellten Düsen wird nachfolgend unter gleichzeitiger Bezugnahme auf Fig. 3 erläutert. Am Innen-Düsendorn 32 ist ein sich in Produktionsrichtung 4 kegelstumpfförmig erweiternder Innendorn-Teller 60 mittels einer Gewindeverbindung 61 angebracht, der einen als Temperierglocke 62 ausgebildeten Innendorn trägt. Dieser Innendorn-Teller 60 begrenzt auf der radial zur Achse 29 innenliegenden Seite eine den Innen-Kanal 37 beendende Innen-Düse 63. Am Außen-Düsendorn ist ein Verlängerungsteil 64 mittels einer Gewindeverbindung 65 angebracht, das den Innendorn-Teller 60 in Produktionsrichtung 4 gesehen teilweise umgibt und so einen erweiterten Bereich des Innen-Kanals 37 auf der Außenseite umgibt, und zwar bis vor die Innen-Düse 63. Diese wird auf der radial außenliegenden Seite von einem Innen-Düsenring 66 umgeben, der auf dem Verlängerungsteil 64 angeordnet ist.

Der Innen-Düsenring 66 ist hülsenförmig ausgebildet und weist eine die Innen-Düse 63 begrenzende, etwa sich in Produktionsrichtung erweiternde kegelstumpfförmige Düsen-Begrenzungsfläche 66a auf. Außerdem weist seine etwa zylindrische Innenfläche an ihrem der Düsen-Begrenzungsfläche 66a abgewandten Ende eine ringförmige Hinterschneidung 66b auf, so daß er nur mit einer zwischen der Hinterschneidung 66b und der Düsen-Begrenzungsfläche 66a ausgebildeten relativ kurzen zylindrischen Anlagefläche 66c auf einer zylindrischen Führungsfläche 64a des Verlängerungsteils 64 des Außen-Düsendorns 34 anliegt und geführt ist. Die Länge der Anlagefläche 66c in Produktionsrichtung 4 ist erheblich geringer als ihr Durchmesser. Am Verlängerungsteil 64 ist im Anschluß an die Führungsfläche 64a ein ringförmig nach außen vorspringendes Widerlager 64b ausgebildet. In diesem sind über den Umfang verteilt abwechselnd Zug-Einstellschrauben 67 und Druck-Einstellschrauben 67' angeordnet. Derartige Einstellschrauben 67,67' sind zweckmäßigerweise in Winkelabständen von 45° über den Umfang vorgesehen, insgesamt also jeweils vier Stuck. Die in Fig. 2 und 3 oben dargestellte Zug-Einstellschraube 67 ist in einer Bohrung 64c des Widerlagers 64b geführt und mit einem Gewinde 67a in eine Gewindebohrung 66d des Innen-Düsenrings 66 geschraubt. Mittels dieser Zug-Einstellschraube 67 kann also der Innen-Düsenring 66 zum Widerlager 64b hin gezogen bzw. verspannt werden.

Die nur in Fig. 2 unten dargestellte Druck-Einstellschraube 67' weist ein Gewinde 67'a auf, das in eine Gewindebohrung 64d des Widerlagers 64b geschraubt ist. Mittels dieser Druck-Einstellschraube 67' kann somit der Innen-Düsenring 66 vom Widerlager 64b weg zur Innen-Düse 63 hin gedrückt bzw. verspannt werden. Durch gemeinsame Betätigung der Einstellschrauben 67 und 67' kann somit der Spalt zwischen Widerlager 64b und Innen-Düsenring 66 über seinen Umfang unterschiedliche Weiten x bzw. y erhalten und damit der Innen-Düsenring 66 nicht nur parallel zur Mittel-Längs-Achse 29 unter Einstellung der Weite c der Innen-Düse 63 verstellt werden; er kann auch - wenn auch nur in geringem Umfang - relativ zur Achse 29 verkantet werden, wodurch die Weite c der Innen-Düse 63 über den Umfang unterschiedlich wird. Wegen der kurzen Führung der Anlagefläche 66c auf der Führungsfläche 64a reicht ein Spiel von einigen Hundertstel Millimeter zwischen diesen aus, um Ungleichmäßigkeiten in der Weite c von einigen Zehntel Millimeter über den Umfang der Innen-Düse 63 herbeizuführen. Außerdem ist Stahl als verwendeter Werkstoff auch bei Temperaturen von 180 bis 250°C elastisch verformbar.

Der Innendorn-Teller 60 ist auf einem konzentrisch zur Achse 29 verlaufenden Tragrohr 68 angeordnet, das mittels der erwähnten Gewindeverbindung 61 mit dem Innen-Düsendorn 32 verbunden ist. Der Innendorn-Teller 60 ist mittels einer Kegelfläche 69 auf einer entsprechenden Kegelsitzfläche 70 am freien Ende des Innen-Düsendorns 32 abgestützt. Auf dieser Kegelsitzfläche 70 kann der Innendorn-Teller 60 relativ zur Achse 29 geringfügig radial verstellt werden, wodurch ein Justierabsatz 71 gebildet werden kann, der auf jeden Fall kleiner als 1 mm, in der Regel nicht größer als 0,5 mm, ist. Zur Verstellung des Innendorn-Tellers 60 ist ein Justier-Kegelring 72 vorgesehen, der mit einer Kegelfläche 73 gegen eine Kegelsitzfläche 74 an der Innenseite des Innendorn-Tellers 60 anliegt. Während die Kegelfläche 69 und die Kegelsitzfläche 70 sich in Produktionsrichtung 4 gesehen verjüngen, erweitern sich die Kegelfläche 73 und die zugeordnete Kegelsitzfläche 74 in Produktionsrichtung 4 gesehen. Der Justier-Kegelring 72 ist mit seiner zylindrischen Innenfläche 75 auf einer kugelringförmigen Führungsfläche 76 geführt, deren Mittelpunkt 77 in der Achse 29 liegt. Gegen eine der Kegelfläche 73 abgewandte Druckfläche 78 des Justier-Kegelrings 72 liegen Druck-Einstellschrauben 79 an, die in Widerlagern 80 verstellbar geführt sind, die wiederum mit dem Tragrohr 68 fest verbunden sind. Durch unterschiedliche Verstellung der Einstellschrauben 79, von denen nur eine dargestellt ist, kann der Justier-Kegelring 72 auf der kugelförmigen Führungsfläche 76 geringfügig verschwenkt werden, so daß der Neigungswinkel a seiner Kegelfläche 73 über den gesamten Umfang des Justier-Kegelrings 72 nicht identisch ist. Dadurch wird der Innendorn-Teller 60 an seiner Abstützung mittels der Kegelfläche 69 auf der Kegelsitzfläche 70 exzentrisch zur Achse 29 verstellt. Damit dies im gewünschten Umfang erfolgt, beträgt die durchschnittliche Neigung der Kegelfläche 73 zur Achse 29 45°; gleichermaßen beträgt die Neigung b der Kegelsitzfläche 70 gegenüber der Achse 29 etwa 45°. Die Kegelfläche 69 und die Kegelsitzfläche 74 sind also unter 90° gegeneinander geneigt. Zur Erleichterung des Verkantens kann die Kegelfläche 73 an ihren Außenbereichen sich über 10 bis 20% ihrer Länge erstreckende Abschrägungen 73a um 1 bis 2° aufweisen, die zeichnerisch nicht darstellbar sind.

Durch Verstellung des Innen-Düsenrings 66 in Richtung der Achse 29 wird die Grund-Weite c der Innen-Düse 63 und in geringem Maße eine über ihren Umfang unterschiedliche Weite c eingestellt. Durch die geschilderte radiale Verstellung des Innendorn-Tellers 60 wird die Weite c der Innen-Düse 63 in größerem Maße über ihren Umfang eingestellt. Hiermit kann also eingestellt werden, daß die Weite c der Innen-Düse 63 über ihren Umfang exakt gleich ist. Andererseits kann hiermit aber auch eingestellt werden, daß sie ungleich ist.

Die Ausgestaltung und Anordnung und Verstellung des Außen-Düsenrings 81 mit seinen Zug-Einstellschrauben 82 und seinen Druck-Einstellschrauben 82' ist völlig gleich zu der des Innen-Düsenrings 66, weshalb auf die dortige Beschreibung verwiesen werden darf. Hiermit kann unter Erzeugung unterschiedlicher Weiten x' und y' die Weite d einer den Außen-Kanal 38 abschließenden Außen-Düse 83 verstellt werden, und zwar mit über den Umfang veränderlicher Weite d.

Die Gaskanäle 56 münden zwischen der Außen-Düse 83 und der in Produktionsrichtung 4 nachgeordneten Innen-Düse 63 aus dem Spritzkopf 25 aus. Die Temperierglocke 62 weist einen in üblicher Weise ausgestalteten, im wesentlichen zylindrischen Kalibrierzylinder 84 auf. Dieser ist auf einem Temperierzylinder 85 angeordnet, der mittels eines Flansches 86 auf dem Tragrohr 68 mit einem Spiel von 1 bis 2 mm gelagert ist.

Der Temperierzylinder 85 ist auf dem Tragrohr 68 mittels einer Verschraubung 87 gehalten und axial in Produktionsrichtung 4 justierbar. Eine Abdichtung ist mittels einer Dichtung 88 erreicht. Der Temperierzylinder 85 ist auf seinem Außenumfang mit einem Heiz-Kanal 89 und einem Kühl-Kanal 90 versehen. Beide Kanäle 89,90 verlaufen schraubenlinienförmig auf dem Außenumfang des Temperierzylinders und sind nach außen durch den Kalibrierzylinder 84 abgedeckt. In Produktionsrichtung 4 gesehen kommt unmittelbar hinter der Innen-Düse 63 zuerst der Heiz-Kanal 89, dem der Kühl-Kanal 90 nachgeordnet ist. Die beiden schraubenlinienförmig verlaufenden Kanäle 89,90 sind durch eine ringstegartige Wand 91 voneinander getrennt, die mit einer Dichtung 92 gegen den Kalibrierzylinder 84 anliegt.

Der Heiz-Kanal 89 ist mittels eines im Temperierzylinder 85 parallel zur Achse 29 verlaufenden Heizmittel-Vorlaufkanals 93 mit dem Versorgungs-Schlauch 47 verbunden, durch den Heizmedium zugeführt wird. Dieser Vorlaufkanal 93 mündet - wie Fig. 3 entnehmbar ist - benachbart zum Innendorn-Teller 60 in den Heiz-Kanal 89. Das Heizmittel durchströmt diesen Heiz-Kanal 89 schraubenlinienförmig in Produktionsrichtung 4 und verläßt ihn durch einen Heizmittel-Rücklaufkanal 94, der parallel zum Vorlaufkanal 93 im Temperierzylinder 85 ausgebildet ist. Das abgekühlte Heizmittel strömt zum Versorgungs-Schlauch 48. Für den Kühl-Kanal 90 gilt entsprechend, daß benachbart zur Wand 91 ein Kühlmittel-Vorlaufkanal 95 in den Kühlkanal 90 einmündet. Das Kühlmedium durchströmt den Kühl-Kanal 90 schraubenlinienförmig in Produktionsrichtung 4 und verläßt diesen durch einen Kühlmittel-Rücklaufkanal 96. Die Kühlmittel-Zufuhr erfolgt durch den Versorgungs-Schlauch 49, während der Rücklauf durch den Versorgungs-Schlauch 50 erfolgt. Die Versorgungs-Schläuche 47 bis 50 sind mittels üblicher Schraubverbindungen 97 an der Stirnseite des Flansches 86 befestigt.

Zwischen der Temperierglocke 62 und dem Innendorn-Teller 60 ist eine Wärmeisolierung 98 angeordnet. Wie Fig. 3 entnehmbar ist, können die Versorgungs-Schläuche 47 bis 53 insbesondee in dem stark gebogenen Bereich vor der jeweiligen Schraubverbindung 97 mittels einer Schraubenfeder 99 umgeben sein.

Der Temperierzylinder 85 ist hohl ausgebildet und weist in seinem Innenraum einen das Tragrohr 68 umgebenden Ausgleichsraum 100 auf. Dieser Ausgleichsraum 100 ist über einen Ausgleichskanal 101 mit dem Versorgungs-Schlauch 51 verbunden, der zum Unter- und Überdruckausgleich mit der Atmosphäre verbunden ist. Der Ausgleichsraum 100 ist über einen in der Trennfläche zwischen dem Innendorn-Teller 60 und der Temperierglocke 62 ausgebildeten Ausgleichsspalt 102 mit dem Formraum 103 verbunden, der zwischen den Halbkokillen 2 bzw. 2' und dem Spritzkopf 25 mit Temperierglocke 62 ausgebildet ist. Der Ausgleichsspalt 102 mündet - in Produktionsrichtung 4 gesehen - unmittelbar hinter der Innen-Düse 63 in den Formraum 103. Im Ausgleichsraum 100 sind über dessen Umfang gleichmäßig verteilt mehrere federnde Radiallager 104 angeordnet. Jedes Radiallager 104 stutzt sich mit einem Lägergehäuse 104a gegen die Innenwand des Temperierzylinders 85 ab, und zwar in dessen Schwerpunktebene. Gegen das Tragrohr 68 stützt es sich mittels einer Kugel 104b ab. Diese liegt wiederum gegen eine Druckfeder 104c an, die sich gegen ein im Lägergehäuse 104a verstellbares Widerlager 104d abstützt.

Die beiden weiteren Versorgungs-Schläuche 52,53 können für weitere Versorgungsaufgaben, beispielsweise die Zuführung von Druckluft oder Trennmittel, vorgesehen sein.

Wie Fig. 3 erkennen läßt, sind in den Halbkokillen, von denen nur die Halbkokillen 2 dargestellt sind, ringförmige Formausnehmungen 105 ausgebildet, die in bekannter Weise an Teilvakuum-Kanäle 106 angeschlossen sind.

Die nur in Fig. 3 angedeutete, vom Extruder durch den Spritzkanal 39 zugeführte Kunststoffschmelze strömt zum Teil durch den Außen-Kanal 38 zur Außen-Düse 83, aus der ein Schlauch extrudiert wird, der sich unter Formung eines mit den Querrillen 24 versehenen Schlauches aufgrund des Teilvakuums in die Formausnehmungen 105 legt. Er bildet das Außenrohr 107 des Rohres 23.

Ein anderer Teil der Schmelze strömt durch den Innen-Kanal 37 zur Innen-Düse 63, aus der ein weiterer Schlauch austritt, der auf den Kalibrierzylinder 84 gelangt. Dieser erweitert sich von der Innen-Düse 63 in Produktionsrichtung 4 leicht nach außen, bis dieser Schlauch in der in Fig. 3 dargestellten Weise gegen die Wellentäler des Außenrohres 107 gelangt und hier mit diesen verschweißt wird. Durch die schwimmende Lagerung des Temperierzylinders 85 aufgrund der Abstützung über federnde Radiallager 104 wird erreicht, daß auf den das Innenrohr 108 bildenden Schlauch über den gesamten Umfang des Kalibrierzylinders 84 gleiche Kräfte ausgeübt werden, so daß eine gleichmäßige Verschweißung mit dem das Außenrohr 107 bildenden Schlauch erfolgt. In diesem geschilderten Bereich ist die Temperierglocke 62 noch beheizt, so daß der Kunststoff noch plastisch ist. Auf dem weiteren Weg in Produktionsrichtung 4 wird dann insbesondere der das glatte Innenrohr 108 bildende Schlauch abgekühlt. Der das Außenrohr 107 bildende Schlauch wird ebenfalls durch in den Halbkokillen 2 bzw. 2' befindliche Kühleinrichtungen, die in der Zeichnung nicht dargestellt sind, gekühlt.

## Patentansprüche

1. Vorrichtung zur Herstellung von Kunststoff-Rohren (23) bei der mit einer Formausnehmung (105) versehene, sich auf einer Formstrecke (9) jeweils paarweise zu einer einen Formraum (103) mit einer Mittel-Längs-Achse (29) umschließenden Form ergänzende Halbkokillen (2,2') auf einem Maschinentisch (1) im Kreislauf in Produktionsrichtung (4) geführt angeordnet sind, wobei der Formstrecke (9) ein Spritzkopf (25) eines Extruders vorgeordnet ist, der mindestens einen im wesentlichen konzentrisch zur Mittel-Längs-Achse (29) verlaufenden Kanal (37 bzw. 38) aufweist, der in einer im wesentlichen ringförmigen Düse (63 bzw. 83) endet, die von zwei Teilen begrenzt wird, wovon ein Teil (66 bzw. 81) zur Veränderung der Weite (c bzw. d) der Düse (63 bzw. 83) verstellbar ist, dadurch gekennzeichnet, daß ein die Düse (63 bzw. 83) unmittelbar begrenzender Düsnring (66,81 bzw.) mittels jeweils mehrerer über seinen Umfang abwechselnd verteilt angeordneter und parallel zur Mittel-Längs-Achse (29) verlaufender Zug-Einstellschrauben (67 bzw. 82) und Druck-Einstellschrauben (67' bzw. 82') mit dem Spritzkopf (25) verbunden ist und auf diesem in Richtung der Mittel-Längs-Achse (29) verschiebbar und hierzu verkantbar geführt ist.

2. Vorrichtung zur Herstellung von Kunststoff-Rohren (23) bei der mit einer Formausnehmung (105) versehene, sich auf einer Formstrecke (9) jeweils paarweise zu einer einen Formraum (103) mit einer Mittel-Längs-Achse (29) umschließenden Form ergänzende Halbkokillen (2,2') auf einem Maschinentisch (1) im Kreislauf in Produktionsrichtung (4) geführt angeordnet sind, wobei der Formstrecke (9) ein Spritzkopf (25) eines Extruders vorgeordnet ist, der mindestens einen im wesentlichen konzentrisch zur Mittel-Längs-Achse (29) verlaufenden Kanal (37 bzw. 38) aufweist, der in einer im wesentlichen ringförmigen Düse (63 bzw. 83) endet, die von zwei Teilen begrenzt wird, wovon ein Teil (66 bzw. 81) zur Veränderung der Weite (c bzw. d) der Düse (63 bzw. 83) verstellbar ist, dadurch gekennzeichnet, daß ein die Düse (63 bzw. 83) unmittelbar begrenzender Innendorn-Teller (60) eine Kegelfläche (69) aufweist, die an einer mit dem Spritzkopf (25) verbundenen, ortsfesten Kegelsitzfläche (70) zur Mittel-Längs-Achse (29) verkantbar anliegt, wobei gegen den Innendorn-Teller (60) mehrere über seinen Umfang verteilt angeordnete und parallel zur Mittel-Längs-Achse (29) verlaufende, mit dem Spritzkopf (25) verbundene Druck-Einstellschrauben (79) anliegen.

3. Vorrichtung nach Anspruch 2, dadurch gekennzeichnet, daß zwischen den Druck-Einstellschrauben (79) und dem Teil (Innendorn-Teller 60) ein gegen das Teil (Innendorn-Teller 60) anliegender Justierring (Justier-Kegelring 72) angeordnet ist, der auf einer ortsfesten Kugelsitzfläche (76) zur Mittel-Längs-Achse (29) verschwenkbar geführt ist.

4. Vorrichtung nach Anspruch 3, dadurch gekennzeichnet, daß der Justierring (Justier-Kegelring 72) mit einer Kegelfläche (73) gegen eine Kegelsitzfläche (74) des Teils (Innendorn-Teller 60) anliegt.

5. Vorrichtung nach den Ansprüchen 2 und 4, dadurch gekennzeichnet, daß der Winkel zwischen einerseits der Kegelfläche (69) und der Kegelsitzfläche (70) zwischen dem Teil (Innendorn-Teller 60) und dem Spritzkopf (25) und andererseits der Kegelfläche (73) und der Kegelsitzfläche (74) zwischen dem Justierring (Justier-Kegelring (72) und dem Teil (Innendorn-Teller 60) etwa 90° beträgt.

6. Vorrichtung nach Anspruch 5, dadurch gekennzeichnet, daß die Neigungswinkel (a,b) der Kegelflächen (69 bzw. 73) und der Kegelsitzflächen (70 bzw. 74) zur Mittel-Längs-Achse (29) etwa 45° betragen.

7. Vorrichtung nach Anspruch 1, dadurch gekennzeichnet, daß die Zug-Einstellschraüben (67 bzw. 82) und die Druck-Einstellschrauben (67' bzw. 82') von außen frei zugänglich sind.

## Claims

1. Apparatus for the production of plastic pipes (23) having half shells (2), which are provided with a mold recess (105) and of which two in each case combine on a molding path (9) to form a mold surrounding a mold space (103) with a central longitudinal axis (29), arranged on a machine bed (1) to be circuit-guided in the direction 4 of production, an injection head (25) of an extruder being arranged upstream of the molding path (9) and having at least one channel (37 and 38, respectively), which extends substantially concentrically of the central longitudinal axis (29) and which issues in a substantially ring-shaped nozzle (63 and 83, respectively) delimited by two components of which at least one (66 and 81, respectively) is adjustable for modification of the width (c and d, respectively) of the nozzle (63 and 83, respectively), characterized in that a nozzle ring (66 and 81, respectively) directly delimiting the nozzle (63 and 83, respectively) is connected with the injection head (25) by means of several tension adjusting screws (67 and 82, respectively) and pressure adjusting screws (67' and 82', respectively), alternatingly distributed along the circumference of the nozzle ring (66 and 81, respectively) and running parallel to the central longitudinal axis (29), and is guided on the injection head (25) displaceably and tiltably in relation to the central longitudinal axis (29).

2. Apparatus for the production of plastic pipes (23) having half shells (2), which are provided with a mold recess (105) and of which two in each case combine on a molding path (9) to form a mold surrounding a mold space (103) with a central longitudinal axis (29), arranged on a machine bed (1) to be circuit-guided in the direction 4 of production, an injection head (25) of an extruder being arranged upstream of the molding path (9) and having at least one channel (internal channel 37 and external channel 38, respectively), which extends substantially concentrically of the central longitudinal axis (29) and which issues in a substantially ring-shaped nozzle (internal nozzle 63 and external nozzle 83, respectively) delimited by two components of which at least one (internal nozzle ring 66 and external nozzle ring 81, respectively) is adjustable for modification of the width (c and d, respectively) of the nozzle (internal nozzle 63 and external nozzle 83, respectively), characterized in that an internal mandrel disk (60) directly defining the nozzle (63 and 83, respectively) has a conical surface (69) which bears against a stationary conical seat surface (70), connected with the injection head (25), in a manner tiltable in relation to the central longitudinal axis (29), several pressure adjusting screws (79) bearing against the internal mandrel disk (60), which are distributed along the circumference of the internal mandrel disk (60) and provided parallel to the central longitudinal axis (29) and connected with the injection head (25).

3. Apparatus according to claim 2, characterized in that an adjustment ring (conical adjustment ring 72) bearing against the component (internal mandrel disk 60) and guided on a stationary spherical seat surface (76) to be tiltable in relation to the central longitudinal axis (29) is arranged between the pressure adjusting screws (79) and the component (internal mandrel disk 60).

4. Apparatus according to claim 3, characterized in that the adjustment ring (conical adjustment ring 72) bears with a conical surface (73) against a conical seat surface (74) of the component (internal mandrel disk 60).

5. Apparatus according to claims 2 and 4, characterized in that the angle formed by the conical surface (69) and the conical seat surface (70) with the component (internal mandrel disk 60) and the injection head (25), on the one hand, and by the conical surface (73) and the conical seat surface (74) with the adjustment ring (conical adjustment ring 72) and the component (internal mandrel disk 60), on the other hand, is approximately 90°.

6. Apparatus according to claim 5, characterized in that, referred to the central longitudinal axis (29), the angles (a, b) of inclination of the conical surfaces (69 and 73, respectively) and the conical seat surfaces (70 and 74, respectively) are approximately 45°.

7. Apparatus according to claim 1, characterized in that the tension adjusting screws (67 and 82, respectively) and the pressure adjusting screws (67' and 82', respectively) are freely accessible from outside.

## Revendications

1. Dispositif pour fabriquer des tubes (23) en matériau synthétique, dans lequel des demi-coquilles (2, 2') pourvues d'un évidement (105), qui se complètent deux à deux à l'intérieur d'un parcours de formage (9) pour former un moule entourant une chambre de moulage (103) avec un axe médian longitudinal (29), sont guidées en un cycle sur une table (1) de machine dans la direction de production (4), une tête d'extrusion (25) étant disposée en amont du parcours de formage (9), laquelle tête d'extrusion comporte un canal (37 et 38) sensiblement concentrique avec l'axe médian longitudinal (29) qui se termine dans une filière (63 et 83) sensiblement annulaire délimitée par deux éléments, dont l'un (66 et 81) est réglable aux fins de faire varier l'ouverture (c et d) de la filière (63 et 83), caractérisé par le fait qu'une bague de fitière (66, 81) qui délimite de manière directe la filière (63 et 83) est liée à la tête d'extrusion (25) par l'intermédiaire de plusieurs vis de réglage de traction (67 et 82) et de compression (67' et 82') réparties en alternance sur son pourtour et disposées parallèlement à l'axe médian longitudinal (29) et est guidée sur celle-ci, dans la direction de l'axe médian longitudinal (29), avec possibilité de déplacement en translation et possibilité de déplacement angulaire.

2. Dispositif pour fabriquer des tubes (23) en matériau synthétique dans lequel des demi-coquilles (2, 2') qui sont pourvues d'un évidement (105), se complètent deux à deux à l'intérieur d'un parcours de guidage (9) pour former un moule contenant une chambre de moulage (103) avec un axe médian longitudinal (29), sont guidées en un circuit sur une table (1) de machine dans la direction de production 4, une tête d'extrusion (25) étant disposée en amont du parcours de formage (9), laquelle tête d'extrusion comporte un canal (37 et 38) sensiblement concentrique avec l'axe médian longitudinal (29) qui se termine dans une filière (63 et 83) sensiblement annulaire délimitée par deux éléments, dont l'un (66 et 81) est réglable aux fins de faire varier l'ouverture (c et d) de la filière (63 et 83), caractérisé par le fait qu'un plateau (60) de poinçon intérieur qui délimite directement la filière (63 et 83) comporte une surface conique (69) qui prend appui avec possibilité d'inclinaison par rapport a l'axe médian longitudinal (29) sur une surface conique (70) formant siège fixe, liée à la tête d'extrusion (25), plusieurs vis de réglage agissant par compression (79) qui sont réparties sur le pourtour du plateau (60) de poinçon intérieur, s'étendent parallèlement à l'axe médian longitudinal (29) et sont liées à la tête d'extrusion (25) prenant appui sur ledit plateau (60) de poinçon intérieur.

3. Dispositif selon la revendication 2, caractérisé par le fait qu'une bague de réglage (bague conique (72) de réglage) qui prend appui sur l'élément (plateau 60 de poinçon intérieur) est disposée entre les vis de réglage agissant par compression (79) et l'élément (plateau 60 de poinçon intérieur), laquelle bague est guidée avec possibilité de pivotement par rapport à l'axe médian longitudinal (29) sur une surface sphérique (76) stationnaire formant siège.

4. Dispositif selon la revendication 2, caractérisé par le fait que la bague de réglage (bague conique (72) de réglage) prend appui par une portée conique (73) sur une surface conique (74) formant siège de l'élément (plateau 60 de poinçon intérieur).

5. Dispositif selon les revendication 2 et 4, caractérisé par le fait que l'angle entre d'une part la surface conique (69) et la surface conique (70) formant siège compris entre la partie (plateau 60 de poinçon intérieur) et la tête d'extrusion (25) et d'autre part la surface conique (73) et la surface conique (74) formant siège compris entre la bague de réglage (bague conique (72) de réglage) et l'élément (plateau 60 de poinçon intérieur) est de 90° environ.

6. Dispositif selon la revendication 5, caractérisé par le fait que l'angle d'inclinaison (a, b) des surfaces coniques (69 et 73) et des surfaces coniques (70 et 74) formant siège par rapport à l'axe médian longitudinal (29) est d'environ 45°.

7. Dispositif selon la revendication 1, caractérisé par le fait que les vis de réglage agissant par traction (67 et 82) et les vis de réglage agissant par compression (67' et 82') sont librement accessibles de l'extérieur.
